# FASCICULE DE BREVET EUROPEEN

(11) **EP 1 923 676 B1**
(45) Date de publication et mention de la délivrance du brevet: **04.08.2010**
(21) Numéro de dépôt: 06291791.9
(22) Date de dépôt: 20.11.2006
(51) Int. Cl.: G01F 11/26, G01F 11/28, F16K 15/14

(54) **Récipient doseur comprenant un élément obturateur de réglage de dose**
Dosierbehälter mit einem Ventil zur Dosierung
Dosing container with a dose regulating valve member

(43) Date de publication de la demande: 21.05.2008
(73) Titulaire: Pont Emballage, 94150 Rungis (FR)
(72) Inventeur: Seris, Georges, 75013 Paris (FR); Catteau, Frédéric, 75006 Paris (FR)
(74) Mandataire: Texier, Christian

(56) Documents cités:
- EP-A- 0 194 407
- WO-A-00/12424
- DE-U1- 7 711 341
- DE-U1- 8 625 869
- FR-A1- 2 756 899
- JP-A- 2006 232 407
- US-A1- 3 347 420
- US-A1- 4 893 732

## Description

### DOMAINE TECHNIQUE GENERAL

L'invention concerne le domaine des récipients doseurs permettant de déverser une dose prédéterminée d'un produit liquide contenu dans le récipient.

De tels types de récipients peuvent être utilisés pour doser des produits liquides tels que des produits d'entretien ménagers ou des médicaments, ou sous forme de poudre.

### ETAT DE LA TECHNIQUE

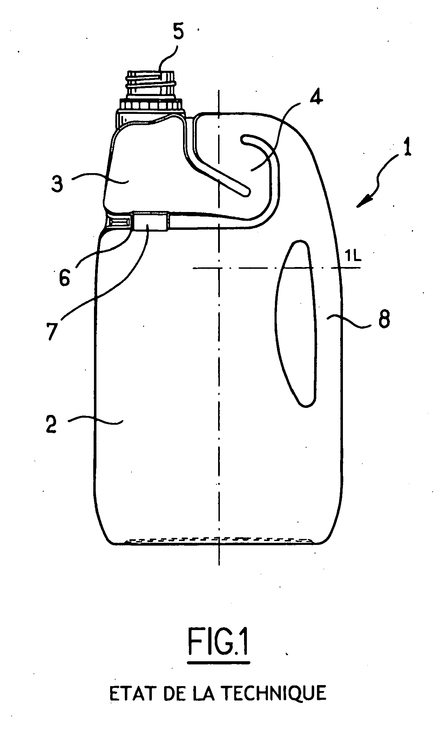

La figure 1 représente un exemple de récipient doseur 1 permettant de délivrer, lorsqu'il est incliné une dose donnée de produit.

Le récipient doseur 1 comprend une cavité principale 2 (ou cavité de stockage) apte à contenir un produit, une cavité de dosage 3, une cavité intermédiaire 4 (ou cavité tampon) et un orifice 5 de déversement. La cavité de dosage 3 est apte à être mise en communication avec la cavité principale 2 via la cavité intermédiaire 4. Les cavités 2, 3 et 4 sont agencées de sorte que lorsque l'on incline le récipient, une dose de produit contenue dans la cavité de dosage 2 se déverse à l'extérieur du récipient 1 travers l'orifice 5, et de manière simultanée, une nouvelle dose de produit est prélevée de la cavité principale et se forme dans la cavité intermédiaire 4. Puis, lorsque l'on ramène le récipient 1 en position de repos, la nouvelle dose de produit formée dans la cavité intermédiaire 4 s'écoule dans la cavité de dosage 3, en vue d'une prochaine utilisation du récipient doseur 1.

Le principe de fonctionnement de ce type de récipient doseur est décrit dans le document FR 2 843 456 A1.

Par ailleurs, comme cela est représenté sur la figure 1, le récipient doseur 1 peut comprendre un orifice 6 pratiqué dans une paroi séparant la cavité de dosage 3 et la cavité principale 2. L'orifice 6 permet le remplissage de la cavité principale 2 (par exemple par une buse de remplissage lors du conditionnement du produit) en introduisant du produit dans le récipient 1 par l'orifice 5. L'orifice 6 est ensuite obstrué par un bouchon 7 pour éviter toute communication directe entre la cavité principale 2 et la cavité de dosage 3 lors de l'utilisation du récipient doseur 1.

Enfin, le récipient doseur 1 comprend une poignée 8 permettant à un utilisateur de saisir le récipient doseur pour le manipuler.

Un inconvénient de ce type de récipient doseur est qu'il ne convient généralement pas aux applications qui requièrent la délivrance de produits dont la quantité doit être définie avec une grande précision, tels qu'un médicament par exemple.

En effet, la quantité de produit prélevée par la cavité intermédiaire fluctue, notamment en fonction de la manière dont le récipient doseur est manipulé.

Le document US 4,893,732 décrit un récipient de stockage comprenant un récipient primaire et un récipient de mesure apte à être mis en communication avec le récipient primaire. Le récipient de stockage comprend en outre un conduit d'évacuation permettant de régler un niveau de mesure afin de déverser une quantité de produit prédéterminée.

### PRESENTATION DE L'INVENTION

Un but de l'invention est d'améliorer la précision du dosage dans un récipient doseur.

Ce problème est résolu dans le cadre de la présente invention grâce à un récipient doseur du type comprenant une cavité principale apte à contenir un produit et une cavité de dosage apte à être mise en communication avec la cavité principale, lorsque le récipient est manipulé entre une position de repos et une position inclinée, pour recevoir du produit de la cavité principale, le récipient comprenant en outre un élément obturateur s'étendant entre la cavité de dosage et la cavité principale, l'élément obturateur comprenant un conduit d'évacuation agencé de sorte que lorsque le récipient est ramené en position de repos, du produit en excès dans la cavité de dosage est évacué par le conduit d'évacuation vers la cavité principale, pour former dans la cavité de dosage une dose de produit de quantité prédéterminée, dans lequel l'élément obturateur comprend des moyens formant valve, aptes à empêcher une pénétration du produit en provenance de la cavité principale vers la cavité de dosage via le conduit d'évacuation lorsque le récipient est en position inclinée.

L'élément obturateur permet d'évacuer du produit en excès contenu dans la cavité de dosage, selon le principe du trop-plein. L'agencement du conduit d'évacuation règle la quantité contenue dans la dose.

Le récipient doseur peut en outre présenter les caractéristiques suivantes :
- le conduit d'évacuation comprend une première portion tubulaire s'étendant dans la cavité de dosage et se terminant par une première ouverture, la première portion présentant une longueur calibrée pour régler la quantité de produit de la dose formée,
- le conduit d'évacuation comprend une deuxième portion tubulaire s'étendant dans la cavité principale et se terminant par une deuxième ouverture, pour favoriser une aspiration du produit en excès par effet de capillarité,
- le conduit d'évacuation comprend une deuxième portion tubulaire s'étendant dans la cavité principale et se terminant par une deuxième ouverture, la deuxième portion tubulaire présentant deux lèvres délimitant l'ouverture,
- les deux lèvres sont aptes à être écartées l'une de l'autre sous l'effet d'une pression exercée par du produit en provenance de la cavité de dosage sur une surface interne d'une paroi de la deuxième portion tubulaire de manière à laisser passer du produit à travers la deuxième ouverture vers la cavité principale,
- les deux lèvres sont aptes à venir en contact l'une avec l'autre sous l'effet d'une pression exercée par du produit sur une surface externe d'une paroi de la deuxième portion tubulaire de manière à empêcher une pénétration dans le conduit de produit en provenance de la cavité principale,
- la deuxième portion de conduit est formée en un matériau souple, apte à être déformée sous l'action du produit,
- le récipient doseur comprend un orifice de communication entre la cavité principale et la cavité de dosage, l'élément obturateur étant adapté pour être disposé dans l'orifice de communication,
- l'élément obturateur comprend une partie d'obturation présentant des ailettes aptes à venir en appui contre une paroi de l'orifice pour obturer l'orifice de manière étanche,
- l'orifice dans lequel est disposé l'élément obturateur est un orifice de remplissage de la cavité principale,
- l'élément obturateur est formé en une seule pièce par moulage par injection d'une matière plastique,
- le récipient comprend une cavité intermédiaire s'étendant entre la cavité principale et la cavité de dosage, la cavité intermédiaire étant agencée pour, lorsque le récipient est amené de la position de repos à la position inclinée, prélever à partir de la cavité principale une dose intermédiaire de produit, et pour, lorsque le récipient est ramené en position de repos, se vider dans la cavité de dosage, la cavité intermédiaire présentant un volume tel que la quantité de produit de la dose intermédiaire est supérieure à la quantité de produit prédéterminée.

### PRESENTATION DES FIGURES

D'autres caractéristiques et avantages ressortiront encore de la description qui suit, laquelle est purement illustrative et non limitative et doit être lue en regard des figures annexées, parmi lesquelles :
- la figure 1, déjà commentée, représente de manière schématique un exemple de récipient doseur conforme à l'état de la technique,
- la figure 2 représente de manière schématique un récipient doseur muni d'un élément obturateur conforme à un mode de réalisation possible de l'invention,
- la figure 3 représente de manière schématique l'élément obturateur,
- la figure 4 représente de manière schématique la circulation d'un produit dans le récipient doseur lorsque celui-ci est amené d'une position de repos en une position inclinée,
- la figure 5 représente de manière schématique la circulation du liquide lorsque celui-ci est ramené de la position inclinée à la position de repos.

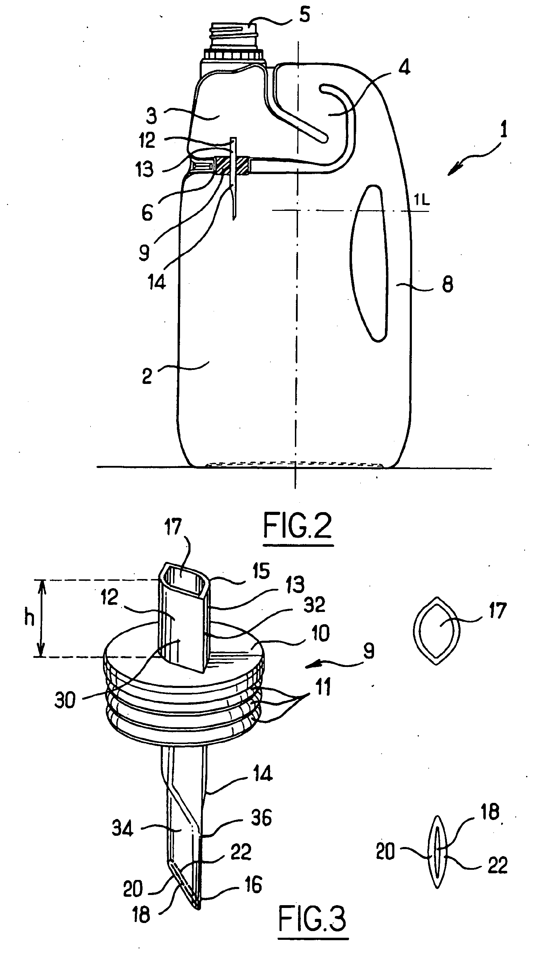

Sur la figure 2, le récipient doseur est identique au récipient doseur de la figure 1, excepté que le bouchon 7 a été remplacé par un élément obturateur 9 conforme à un mode de réalisation de l'invention.

L'élément obturateur 9 est illustré de manière plus précise sur la figure 3. Il est formé en une seule pièce par moulage par injection d'un matériau souple, tel que du polyéthylène basse densité présentant une flexibilité comprise entre 40 et 60 degrés Shore.

L'élément obturateur 9 comprend une partie d'obturation 10 présentant une forme générale cylindrique. La partie d'obturation 10 est destinée à venir obturer l'orifice 6. La partie d'obturation 10 comprend des ailettes 11 aptes à venir en appui contre une paroi de l'orifice pour maintenir l'élément obturateur 9 dans l'orifice 6 et obturer l'orifice 6 de manière étanche.

L'élément obturateur 10 comprend en outre un conduit d'évacuation 12 de forme générale tubulaire, qui lorsque l'élément obturateur 10 est positionné dans l'orifice 6, s'étend entre la cavité principale 2 et la cavité de dosage 3.

Plus précisément, le conduit d'évacuation 12 s'étend à travers la partie d'obturation 10. Le conduit 12 comprend une première portion 13 faisant saillie d'un côté de la partie d'obturation 10 et une deuxième portion 14 faisant saillie de l'autre côté de la partie d'obturation 10.

Ainsi, lorsque l'élément d'obturation est positionné dans l'orifice 6, la première portion 13 s'étend dans la cavité de dosage 3 et la deuxième portion 14 s'étend dans la cavité principale 2.

La première portion 13 présente une première extrémité 15 dotée d'un orifice 17.

La deuxième portion 14 présente une deuxième extrémité 16 dotée d'un orifice 18.

Comme on peut le voir sur la figure 3, le conduit 13 est aplati au niveau de la deuxième extrémité 16. Le conduit 13 présente des parois 30 et 32 qui convergent vers la deuxième extrémité 16, de sorte que ces parois forment, au niveau de la deuxième extrémité 16, deux lèvres 20 et 22 en contact l'une avec l'autre. Les deux lèvres 20 et 22 délimitent l'ouverture 18 qui présente la forme d'une fente.

Par ailleurs, les parois 30 et 32 présentent au niveau de la deuxième extrémité 16, des surfaces externes 34, 36 sensiblement planes.

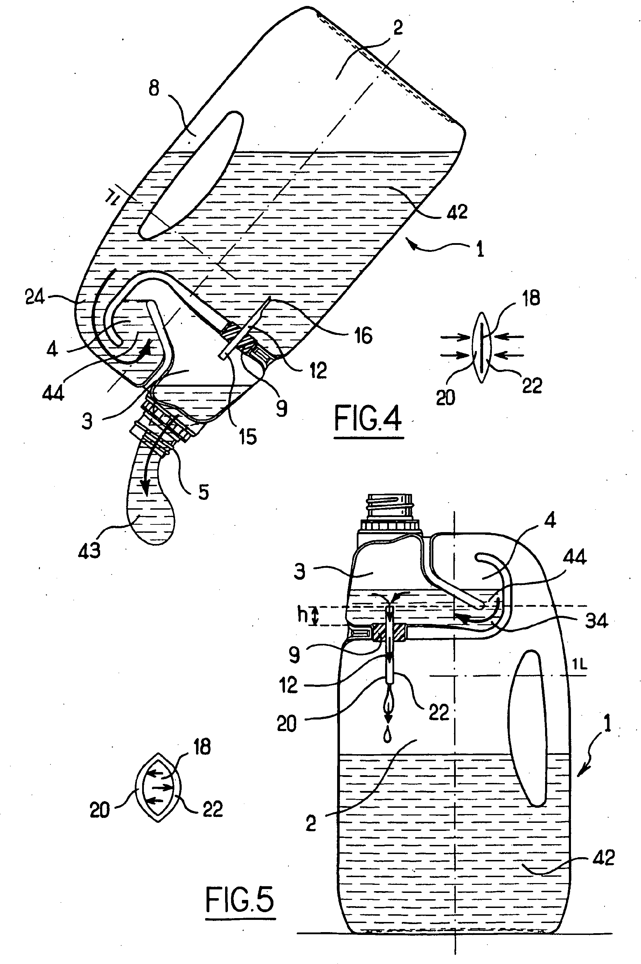

Les figures 4 et 5 illustrent le fonctionnement de l'élément obturateur 9 lors de l'utilisation du récipient doseur 1 pour délivrer une dose d'un liquide 42.

Sur la figure 4, le récipient doseur 1 est amené en position inclinée.

Cela a pour effet qu'une dose 43 de liquide contenue initialement dans la cavité 3 de dosage est déversée à l'extérieur du récipient à travers l'orifice 5.

Simultanément, une partie du liquide 42 contenu dans la cavité principale 2 s'écoule vers la cavité intermédiaire 4 via un premier canal 24 formé entre la cavité principale 2 et la cavité intermédiaire 4 de manière à former une dose intermédiaire 44 de liquide dans la cavité intermédiaire 4.

Durant cette étape, le liquide 42 contenu dans la cavité principale 2 exerce une pression sur les surfaces externes 34 et 36 de la deuxième portion 14 du conduit 12. Sous l'effet de la pression exercée par le liquide 42, les lèvres 20 et 22 viennent en contact l'une avec l'autre de manière à empêcher une pénétration dans le conduit 12 de liquide 42 en provenance de la cavité principale 2.

L'étanchéité du contact entre les lèvres 20 et 22 est renforcée par le fait que la deuxième portion 14 de conduit est réalisée en un matériau souple qui peut se plier sous l'effet des turbulences générées dans le liquide 42. Le pliage de la deuxième portion contribue à empêcher une pénétration de liquide dans le conduit 12.

Sur la figure 5, le récipient 1 est ramené en position de repos (il est par exemple déposé sur un support plan horizontal).

Cela a pour effet que la dose intermédiaire 44 de liquide contenue dans la cavité intermédiaire 4 se déverse dans la cavité de dosage 3 via un deuxième canal 34 formé entre la cavité intermédiaire 4 et la cavité de dosage 3.

Simultanément, une partie du liquide 44 venant remplir la cavité de dosage 3 s'écoule vers la cavité principale 2 via le conduit 12 de l'élément obturateur 9.

En effet, la première portion 13 du conduit présente une longueur h qui est calibrée de manière à permettre l'évacuation du produit en excès dans la cavité de dosage 2.

Du liquide pénètre dans le conduit 12 par le premier orifice 17. Par l'effet de la gravité, le liquide ayant pénétré dans le conduit 12 exerce une pression sur les parois internes de la deuxième portion 14 du conduit 12. Sous l'effet de la pression exercée par le liquide 44, les deux lèvres 20 et 22 s'écartent l'une de l'autre de manière à laisser passer le liquide vers la cavité principale 2.

Par un effet de trop-plein, du liquide s'écoule par le conduit 12 et est ainsi recyclé vers la cavité principale 2.

On notera qu'outre l'effet de la gravité, l'écoulement du liquide dans le conduit 12 est favorisé par la longueur du conduit. En effet, la présence de la deuxième portion 14 de conduit crée une aspiration du liquide par effet de capillarité.

L'écoulement du liquide 44 dans le conduit 12 cesse lorsque le niveau de liquide dans la cavité de dosage 3 atteint le premier orifice 17 (c'est-à-dire une hauteur h). Ce niveau représenté en traits pointillés sur la figure 5 correspond au niveau de la dose de liquide finale contenue dans la cavité de dosage 3.

Ainsi, la longueur h de la première portion 13 du conduit d'évacuation règle la quantité de liquide contenue dans la dose. Cette quantité peut être réglée avec une précision de l'ordre de 1 %.

Le récipient doseur 1 présente la particularité que la cavité intermédiaire 4 est dimensionnée pour présenter un volume tel que la quantité de liquide de la dose intermédiaire 44 est supérieure à la quantité de liquide obtenue dans la dose finale. De cette manière, lorsque le récipient doseur 1 est ramené en position de repos, il se produit nécessairement un écoulement de liquide en excès par le conduit d'évacuation 12. Cette caractéristique garantit que la dose de liquide générée dans la cavité de dosage présentera toujours la quantité souhaitée.

Comme on l'aura compris, l'élément d'obturation remplit à la fois une fonction d'ajustement du dosage et une fonction de clapet anti-retour.

## Revendications

1. Récipient doseur (1) du type comprenant une cavité principale (2) apte à contenir un produit (42) et une cavité de dosage (3) apte à être mise en communication avec la cavité principale (2), lorsque le récipient (1) est manipulé entre une position de repos et une position inclinée, pour recevoir du produit de la cavité principale (2), le récipient (1) comprenant en outre un élément obturateur (9) s'étendant entre la cavité de dosage (3) et la cavité principale (2), l'élément obturateur (9) comprenant un conduit d'évacuation (12) agencé de sorte que lorsque le récipient (1) est ramené en position de repos, du produit en excès dans la cavité de dosage (3) est évacué par le conduit d'évacuation (12) vers la cavité principale (2), pour former dans la cavité de dosage (3) une dose de produit de quantité prédéterminée, **caractérisé en ce que** l'élément obturateur (9) comprend des moyens (18, 20, 22, 34, 36) formant valve, aptes à empêcher une pénétration du produit (42) en provenance de la cavité principale (2) vers la cavité de dosage (3) via le conduit d'évacuation (12) lorsque le récipient (1) est en position inclinée.

2. Récipient selon la revendication 1, dans lequel le conduit d'évacuation (12) comprend une première portion tubulaire (13) s'étendant dans la cavité de dosage (3) et se terminant par une première ouverture (17), la première portion (13) présentant une longueur (h) calibrée pour régler la quantité de produit de la dose formée.

3. Récipient selon l'une des revendications 1 ou 2, dans lequel le conduit d'évacuation (12) comprend une deuxième portion tubulaire (14) s'étendant dans la cavité principale (2) et se terminant par une deuxième ouverture (18), pour favoriser une aspiration du produit en excès par effet de capillarité.

4. Récipient selon l'une des revendications qui précèdent, dans lequel le conduit d'évacuation (12) comprend une deuxième portion tubulaire (14) s'étendant dans la cavité principale (2) et se terminant par une deuxième ouverture (18), la deuxième portion tubulaire (14) présentant deux lèvres (20, 22) délimitant l'ouverture (18).

5. Récipient selon la revendication 4, dans lequel les deux lèvres (20, 22) sont aptes à être écartées l'une de l'autre sous l'effet d'une pression exercée par du produit (44) en provenance de la cavité de dosage (3) sur une surface interne d'une paroi de la deuxième portion tubulaire (14) de manière à laisser passer du produit à travers la deuxième ouverture (18) vers la cavité principale (2).

6. Récipient selon l'une des revendications 4 ou 5, dans lequel les deux lèvres (20, 22) sont aptes à venir en contact l'une avec l'autre sous l'effet d'une pression exercée par du produit sur une surface externe (34, 36) d'une paroi de la deuxième portion tubulaire (14) de manière à empêcher une pénétration dans le conduit (12) de produit (42) en provenance de la cavité principale (2).

7. Récipient selon l'une des revendications qui précèdent, dans lequel la deuxième portion (14) de conduit est formée en un matériau souple, apte à être déformée sous l'action du produit (44).

8. Récipient selon l'une des revendications qui précèdent, comprenant un orifice (6) de communication entre la cavité principale (2) et la cavité de dosage (3), l'élément obturateur (9) étant adapté pour être disposé dans l'orifice de communication (6).

9. Récipient selon la revendication 8, dans lequel l'élément obturateur (9) comprend une partie d'obturation (10) présentant des ailettes (11) aptes à venir en appui contre une paroi de l'orifice (6) pour obturer l'orifice de manière étanche.

10. Récipient selon l'une des revendications 8 ou 9, dans lequel l'orifice (6) dans lequel est disposé l'élément obturateur est un orifice de remplissage de la cavité principale (2).

11. Récipient selon l'une des revendications qui précèdent, dans lequel l'élément obturateur (9) est formé en une seule pièce par moulage par injection d'une matière plastique.

12. Récipient selon l'une des revendications qui précèdent, comprenant une cavité intermédiaire (4) s'étendant entre la cavité principale (2) et la cavité de dosage (3), la cavité intermédiaire (4) étant agencée pour, lorsque le récipient (1) est amené de la position de repos à la position inclinée, prélever à partir de la cavité principale (2) une dose intermédiaire (44) de produit, et pour, lorsque le récipient (1) est ramené en position de repos, se vider dans la cavité de dosage (3), la cavité intermédiaire (4) présentant un volume tel que la quantité de produit de la dose intermédiaire (44) est supérieure à la quantité de produit prédéterminée.

## Claims

1. A metering container (1) of the type comprising a main cavity (2) capable of containing a product (42) and a dosage cavity (3) capable of being put into communication with the main cavity (2), when the container (1) is handled between a rest position and a tilted position, in order to receive the product from the main cavity (2), the container (1) further comprising a closure member (9) extending between the dosage cavity (3) and the main cavity (2), the closure member (9) comprising a discharge conduit (12) laid out so that when the container (1) is brought back to the rest position, excess product in the dosage cavity (3) is discharged through the discharge conduit (12) towards the main cavity (2), in order to form in the dosage cavity (3) a dose of product with a predetermined amount,
**characterized in that** the closure member (9) comprises means (18, 20, 22, 34, 36) forming a valve, capable of preventing penetration of the product (42) from the main cavity (2) towards the dosage cavity (3) via the discharge conduit (12) when the container (1) is in a tilted position.

2. The container according to claim 1, wherein the discharge conduit (12) comprises a first tubular portion (13) extending in the dosage cavity (3) and ending with a first aperture (17), the first portion (13) having a calibrated length (h) for adjusting the product amount of the formed dose.

3. The container according to any of claims 1 or 2, wherein the discharge conduit (12) comprises a second tubular portion (14) extending in the main cavity (2) and ending with a second aperture (18) in order to promote suction of the excess product by a capillarity effect.

4. The container according to any of the preceding claims, wherein the discharge conduit (12) comprises a second tubular portion (14) extending in the main cavity (2) and ending with a second aperture (18), the second tubular portion (14) having two lips (20, 22) delimiting the aperture (18).

5. The container according to claim 4, wherein both lips (20, 22) are capable of being moved away from each other under the effect of pressure exerted by product (44) from the dosage cavity (3) on an internal surface of a wall of the second tubular portion (14) so as to let the product pass through the second aperture (18) towards the main cavity (2).

6. The container according to any of claims 4 or 5, wherein both lips (20, 22) are capable of coming into contact with each other under the effect of pressure exerted by product on an external surface (34, 36) of a wall of the second tubular portion (14) so as to prevent penetration of product (42) from the main cavity (2) into the conduit (12).

7. The container according to any of the preceding claims, wherein the second conduit portion (14) is formed in a flexible material, capable of being deformed under the action of the product (44).

8. The container according to any of the preceding claims, comprising a communicating orifice (6) between the main cavity (2) and the dosage cavity (3), the closure member (9) being adapted so as to be positioned in the communication orifice (6).

9. The container according to claim 8, wherein the closure member (9) comprises a closure portion (10) having fins (11) capable of bearing against a wall of the orifice (6) in order to seal the orifice tightly.

10. The container according to any of claims 8 or 9, wherein the orifice (6) in which the closure member is positioned is an orifice for filling the main cavity (2).

11. The container according to any of the preceding claims, wherein the closure member (9) is formed in a single piece by injection moulding of a plastic material.

12. The container according to any of the preceding claims, comprising an intermediate cavity (4) extending between the main cavity (2) and the dosage cavity (3), the intermediate cavity (4) being arranged for, when the container (1) is brought from the rest position to the tilted position, picking up an intermediate product dose (44) from the main cavity (2) and for, when the container (1) is brought back to the rest position, being emptied into the dosage cavity (3), the intermediate cavity (4) having a volume such that the amount of product of the intermediate dose (44) is greater than the predetermined product amount.

## Patentansprüche

1. Dosierbehälter (1) der Bauart, die einen Haupthohlraum (2) umfasst, der imstande ist, ein Produkt (42) zu enthalten, und einen Dosierhohlraum (3), der imstande ist, mit dem Haupthohlraum (2) zu kommunizieren, wenn der Behälter (1) zwischen einer Ruhestellung und einer geneigten Stellung gehandhabt wird, um Produkt aus dem Haupthohlraum (2) zu empfangen, wobei der Behälter (1) weiterhin ein Verschlusselement (9) umfasst, das sich zwischen dem Dosierhohlraum (3) und dem Haupthohlraum (2) erstreckt, wobei das Verschlusselement (9) eine Abflussleitung (12) umfasst, die derart ausgebildet ist, dass, wenn der Behälter (1) in die Ruhestellung zurückgeführt wird, im Dosierhohlraum (3) überschüssiges Produkt von der Abflussleitung (12) in den Haupthohlraum (2) abgeleitet wird, um im Dosierhohlraum (3) eine Produktdosis vorbestimmter Menge zu bilden, **dadurch gekennzeichnet, dass** das Verschlusselement (9) ventilbildende Mittel (18, 20, 22, 34, 36) umfasst, die imstande sind, das Eindringen des Produkts (42) aus dem Haupthohlraum (2) in den Dosierhohlraum (3) über die Abflussleitung (12) zu verhindern, wenn sich der Behälter (1) in geneigter Stellung befindet.

2. Behälter nach Anspruch 1, bei dem die Abflussleitung (12) einen ersten röhrenförmigen Abschnitt (13) umfasst, der sich im Dosierhohlraum (3) erstreckt und in einer ersten Öffnung (17) endet, wobei der erste Abschnitt (13) eine kalibrierte Länge (h) aufweist, um die Produktmenge der gebildeten Dosis einzustellen.

3. Behälter nach einem der Ansprüche 1 oder 2, bei dem die Abflussleitung (12) einen zweiten röhrenförmigen Abschnitt (14) umfasst, der sich im Haupthohlraum (2) erstreckt und in einer zweiten Öffnung (18) endet, um ein Ansaugen überschüssigen Produkts durch Kapillarwirkung zu fördern.

4. Behälter nach einem der vorangehenden Ansprüche, bei dem die Abflussleitung (12) einen zweiten röhrenförmigen Abschnitt (14) umfasst, der sich im Haupthohlraum (2) erstreckt und in einer zweiten Öffnung (18) endet, wobei der zweite röhrenförmige Abschnitt (14) zwei die Öffnung (18) begrenzende Lippen (20, 22) aufweist.

5. Behälter nach Anspruch 4, bei dem die zwei Lippen (20, 22) imstande sind, voneinander durch die Wirkung eines Drucks beabstandet zu sein, der von Produkt (44) aus dem Dosierhohlraum (3) auf eine innere Fläche einer Wand des zweiten röhrenförmigen Abschnitts (14) derart ausgeübt wird, dass Produkt durch die zweite Öffnung (18) in den Haupthohlraum (2) passieren kann.

6. Behälter nach einem der Ansprüche 4 oder 5, bei dem die zwei Lippen (20, 22) imstande sind, miteinander durch die Wirkung eines Drucks in Kontakt zu kommen, der von Produkt auf eine äußere Fläche (34, 36) einer Wand des zweiten röhrenförmigen Abschnitts (14) derart ausgeübt wird, dass ein Eindringen von Produkt (42) in die Leitung (12) aus dem Haupthohlraum (2) verhindert wird.

7. Behälter nach einem der vorangehenden Ansprüche, bei dem der zweite Abschnitt (14) der Leitung aus einem elastischen Werkstoff gebildet ist, der imstande ist, unter Einwirkung des Produkts (44) deformiert zu werden.

8. Behälter nach einem der vorangehenden Ansprüche, der eine Kommunikationsöffnung (6) zwischen dem Haupthohlraum (2) und dem Dosierhohlraum (3) umfasst, wobei das Verschlusselement (9) geeignet ist, in der Kommunikationsöffnung (6) angeordnet zu sein.

9. Behälter nach Anspruch 9, bei dem das Verschlusselement (9) einen Verschlussabschnitt (10) umfasst, der Flügel (11) aufweist, die imstande sind, sich auf einer Wand der Öffnung (6) abzustützen, um die Öffnung dicht zu verschließen.

10. Behälter nach einem der Ansprüche 8 oder 9, bei dem die Öffnung (6), in der das Verschlusselement angeordnet ist, eine Einfüllöffnung des Haupthohlraums (2) ist.

11. Behälter nach einem der vorangehenden Ansprüche, bei dem das Verschlusselement (9) aus einem einzigen Teil durch Spritzgießen eines Kunststoffs geformt ist.

12. Behälter nach einem der vorangehenden Ansprüche, der einen Zwischenhohlraum (4) umfasst, der sich zwischen dem Haupthohlraum (2) und dem Dosierhohlraum (3) erstreckt, wobei der Zwischenhohlraum (4) ausgebildet ist, um, wenn der Behälter (1) aus der Ruhestellung in die geneigte Stellung geführt wird, aus dem Haupthohlraum (2) eine Zwischendosis (44) Produkt zu entnehmen und um, wenn der Behälter (1) in die Ruhestellung zurückgeführt wird, sich in den Dosierhohlraum (3) zu entleeren, wobei der Zwischenhohlraum (4) ein Volumen aufweist, das derart ist, das die Produktmenge der Zwischendosis (44) größer ist als die vorbestimmte Produktmenge.
